(19) **Europäisches Patentamt**
**European Patent Office**
**Office européen des brevets**

(11) **EP 2 725 803 A2**

(12) **EUROPEAN PATENT APPLICATION**

(43) Date of publication:
**30.04.2014 Bulletin 2014/18**

(51) Int Cl.:
**H04N 9/69** *(2006.01)* **H04N 9/67** *(2006.01)*

(21) Application number: **13174638.0**

(22) Date of filing: **02.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.10.2012 KR 20120119253**

(71) Applicant: **Samsung Display Co., Ltd.**
**Yongin-City, Gyeonggi-Do, 446-711 (KR)**

(72) Inventors:
• **Kim, Kyoung-Tae**
**446-711 Yongin-City (KR)**
• **Lim, Chul-Gyu**
**446-711 Yongin-City (KR)**
• **Ryu, Byong-Taw**
**446-711 Yongin-City (KR)**

(74) Representative: **Gulde & Partner**
**Patentanwälte - Rechtsanwälte**
**Wallstraße 58/59**
**10179 Berlin (DE)**

(54) **Device for converting color gamut and method thereof**

(57) A color gamut converting device (100, 200) includes a target display processor (110, 210) converting an RGB signal of a target display into a tristimulus value XYZ according to a color gamut of the target display, and a reference display processor (120, 220) calculating an R'G'B' signal of a reference display representing the same tristimulus value XYZ as the tristimulus value XYZ, wherein the reference display is a display reproducing a color to be displayed according to the RGB signal in the target display according to the R'G'B' signal.

EP 2 725 803 A2

**Description**

BACKGROUND

1. Field

Embodiments relate to a color gamut converting device and a method thereof. More particularly, embodiments relate to a color gamut converting device simulating a display image having a predetermined color gamut as one display.

2. Description of the Related Art

Recently, various displays such as liquid crystal displays, field emission displays, plasma display panels (PDPs), and organic light emitting displays have been developed. In general, displays of different kinds have different color gamuts. Also, although the displays are similar to each other, they may have different color gamuts according to a production process or a formation material. The displays having different color gamuts reproduce different colors for the same input video signal. Accordingly, image quality may differ for each display.

The above information disclosed in this Background section is only for enhancement of understanding of the background of the invention and therefore it may contain information that does not form the prior art that is already known in this country to a person of ordinary skill in the art.

SUMMARY

Embodiments are directed to a color gamut converting device, including a target display processor converting an RGB signal of a target display into a tristimulus value XYZ according to a color gamut of the target display, and a reference display processor calculating an R'G'B' signal of a reference display representing the same tristimulus value XYZ as the tristimulus value XYZ. The reference display is a display reproducing a color to be displayed according to the RGB signal in the target display according to the R'G'B' signal.

The target display processor may include an inverse gamma processor calculating an RsGsBs value by inverse gamma correction of the RGB signal of the target display, and a tristimulus value calculator calculating the tristimulus value XYZ from the RsGsBs value by using a first convert matrix.

The RsGsBs value may have a value of 0 to 1 as a value of which the RGB signal is linearly changed.

The inverse gamma processor may calculate the RsGsBs value from the RGB signal by using an inverse gamma 1D look up table representing an RsGsBs value for the RGB signal.

The target display processor may further include a target convert matrix generator generating a first convert matrix by using xy chromaticity coordinates of an RGB primary of the target display, white xy chromaticity coordinates, and a white luminance.

The target convert matrix generator may generate the first convert matrix when a sum of a measuring XYZ of the RGB primary of the target display is the same as the white measuring XYZ.

The reference display processor may include a color gamut converter converting the tristimulus value XYZ into an Rs'Gs'Bs' value by using a second convert matrix, and a gamma processor gamma-correcting the Rs'Gs'Bs' value to calculate the R'G'B' signal.

The Rs'Gs'Bs' value may have a value of 0 to 1 as a value of which the R'G'B' signal is linearly changed.

The gamma processor may calculate the R'G'B' signal from the Rs'Gs'Bs' value by using a gamma 1D look up table representing the R'G'B' value for the Rs'Gs'Bs' value.

The reference display processor may further include a reference convert matrix generator generating the second convert matrix by using xy chromaticity coordinates of the RGB primary of the reference display, white xy chromaticity coordinates, and a white luminance.

The reference convert matrix generator may generate the second convert matrix when a sum of a measuring XYZ of the RGB primary of the reference display is the same as the white measuring XYZ.

The target display processor may further include a tristimulus value calculator calculating the tristimulus value XYZ for the RGB signal of the target display by 3D interpolation using a target 3D look up table.

The target display processor may further include a target 3D look up table generator generating the target 3D look up table by measuring an $n \times n \times n$ number patches in the target display to obtain a pair between an RGB lattice and a tristimulus value XYZ.

The reference display processor may include a color gamut converter obtaining the R'G'B' signal by calculating the tristimulus value XYZ that is calculated most similarly to the tristimulus value XYZ by a 3D interpolation using a reference 3D look up table.

The reference display processor further may include a reference 3D look up table generator generating the reference 3D look up table by measuring an n×n×n of number patches in the reference display to obtain a pair between an R'G'B' lattice and the tristimulus value XYZ.

The reference display processor may include a color gamut converter converting the RGB signal of the target display into the R'G'B' signal of the reference display by a 3D interpolation using a reference 3D look up table.

Embodiments are also directed to a method of converting a color gamut, including a target display processing operation converting an RGB signal of a target display into a tristimulus value XYZ according to a color gamut of a target display, and a reference display processing operation calculating an R'G'B' signal of a reference display representing the tristimulus value XYZ that is the same as the tristimulus value XYZ. The reference display is a display reproducing a color to be displayed according to the RGB signal in the target display according to the R'G'B' signal.

The target display processing operation may include calculating an RsGsBs value by inversely gamma-correcting the RGB signal of the target display, and calculating the tristimulus value XYZ from the RsGsBs value by using a first convert matrix, and the RsGsBs value may have a value of 0 to 1 as a value of which the RGB signal is linearly changed.

The calculation of the RsGsBs value may include calculating the RsGsBs value from the RGB signal by using an inverse gamma 1D look up table representing an RsGsBs value for the RGB signal.

The target display processing operation may include generating the first convert matrix by using xy chromaticity coordinates of an RGB primary of the target display, white xy chromaticity coordinates, and a white luminance.

The generating of the first convert matrix may include generating the first convert matrix when a sum of a measuring XYZ of the RGB primary of the target display is the same as the white measuring XYZ.

The reference display processing operation may include calculating the tristimulus value XYZ into an Rs'Gs'Bs' value by using a second convert matrix, and calculating the R'G'B' signal by gamma-correcting the Rs'Gs'Bs' value, and the Rs'Gs'Bs' value may have a value of 0 to 1 as a value of which the R'G'B' signal is linearly changed.

The calculation of the tristimulus value XYZ into the Rs'Gs'Bs' value may include calculating the R'G'B' signal from the Rs'Gs'Bs' value by using a gamma 1D look up table representing an R'G'B' value for the Rs'Gs'Bs' value.

The reference display processing operation may include generating a second convert matrix by using xy chromaticity coordinates of an RGB primary of the reference display, white xy chromaticity coordinates, and a white luminance.

The generating of the second convert matrix may generate the second convert matrix when a sum of a measuring XYZ of the RGB primary of the reference display is the same as the white measuring XYZ.

The target display processing operation may include calculating the tristimulus value XYZ for the RGB signal of the target display by 3D interpolation using a target 3D look up table.

The target display processing operation may include generating the target 3D look up table by measuring an n×n×n number of patches in the target display to obtain a pair between an RGB lattice and the tristimulus value XYZ.

The reference display processing operation may include obtaining the R'G'B' signal by calculating the tristimulus value XYZ that is calculated most similarly to the tristimulus value XYZ by 3D interpolation using a reference 3D look up table.

The reference display processing operation may include generating the reference 3D look up table by measuring an n×n×n number of patches in the reference display to obtain a pair between an R'G'B' lattice and the tristimulus value XYZ.

The reference display processing operation may include converting the RGB signal of the target display into the R'G'B' signal of the reference display by 3D interpolation using a reference 3D look up table.

BRIEF DESCRIPTION OF THE DRAWINGS

Features will become apparent to those of skill in the art by describing in detail exemplary embodiments with reference to the attached drawings in which:

FIG. 1 is a block diagram of a color gamut converting device according to an exemplary embodiment.

FIG. 2 is an inverse gamma graph representing an RsGsBs value for RGB according to an exemplary embodiment.

FIG. 3 is a gamma graph representing RGB values for RsGsBs value according to an exemplary embodiment.

FIG. 4 is a flowchart of a color gamut converting method according to an exemplary embodiment.

FIG. 5 is a block diagram of a color gamut converting device according to another exemplary embodiment.

FIG. 6 is a block diagram of a color gamut converting device according to yet another exemplary embodiment.

DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

Further, in the embodiments, like reference numerals designate like elements throughout the specification representatively in a first embodiment, and only elements of embodiments other than those of the first embodiment will be described.

Descriptions of parts not related to the present invention may be omitted; like reference numerals designate like elements throughout the specification.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising" will be understood to imply the inclusion of stated elements but not the exclusion of any other elements.

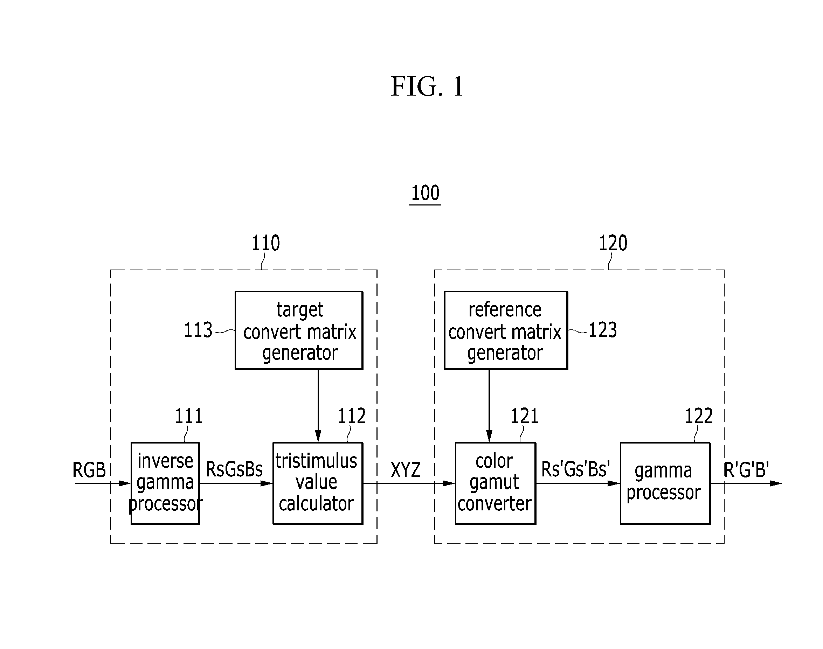

FIG. 1 is a block diagram of a color gamut converting device according to an exemplary embodiment.

Referring to FIG. 1, a color gamut converting device 100 includes a target display processor 110 and a reference display processor 120.

Hereafter, a display to be simulated is referred to as a target display, and a display reproducing a color to be displayed in the target display is referred to as a reference display. A capital letter R means red, a capital letter G means green, a capital letter B means blue, and XYZ means a tristimulus value.

The target display processor 110 converts an RGB signal of the target display into a tristimulus value XYZ according to a color gamut of the target display and outputs it. The RGB signal is referred to as an R signal, a G signal, and a B signal.

The reference display processor 120 receives a tristimulus value XYZ from the target display processor 110 and converts the tristimulus value XYZ into an R'G'B' signal. At this time, the reference display processor 120 calculates the R'G'B' signal of the reference display representing the same tristimulus value XYZ as the tristimulus value XYZ output from the target display processor 110 according to the RGB signal. That is, the tristimulus value XYZ calculated in the target display processor 110 according to the RGB signal is the same as the tristimulus value XYZ calculated in the reference display processor 120 according to the R'G'B' signal. The R'G'B' signal is totally referred to as a group of the R' signal, the G' signal, and the B' signal.

Hereinafter, the target display processor 110 converting the RGB signal into the tristimulus value XYZ according to the color gamut of the target display and the reference display processor 120 converting the tristimulus value XYZ into the R'G'B' signal will be described.

Here, it is assumed that xy chromaticity coordinates of an RGB primary of the target display, white xy chromaticity coordinates, and a luminance are known, and a target display and a reference display are displays having additivity.

To have additivity means that a sum of the measured XYZ of the RGB primary is the same as that of the white measured XYZ. That is, a display having additivity satisfies Equation 1.

$$(\text{Equation 1})$$

$$\begin{bmatrix} Xw \\ Yw \\ Zw \end{bmatrix} = \begin{bmatrix} Xr + Xg + Xb \\ Yr + Yg + Yb \\ Zr + Zg + Zb \end{bmatrix}$$

Here, a subscript w means white, a subscript r means red, a subscript g means green, and a subscript b means blue.

The target display processor 110 includes an inverse gamma processor 111, a tristimulus value calculator 112, and a target convert matrix generator 113. The reference display processor 120 includes a color gamut converter 121, a gamma processor 122, and a reference convert matrix generator 123.

The inverse gamma processor 111 compensates the RGB signal of the target display into the inverse gamma to calculate the RsGsBs value. The RGB signal as luminance information of a red pixel, a green pixel, and a blue pixel is expressed as a digital value having a grayscale of a predetermined number, for example, $1024 = 2^{10}$, $256 = 2^{8}$, or $64 = 2^{6}$. The RsGsBs value as a value that the RGB signal of the digital value is linearly changed is expressed as a value from 0 to 1. That is, the RsGsBs value is a value of a gamma that is applied to the RGB signal. The RsGsBs value is totally referred to as the sum of Rs, Gs, and Bs that are calculated by applying the gamma to the RGB signal.

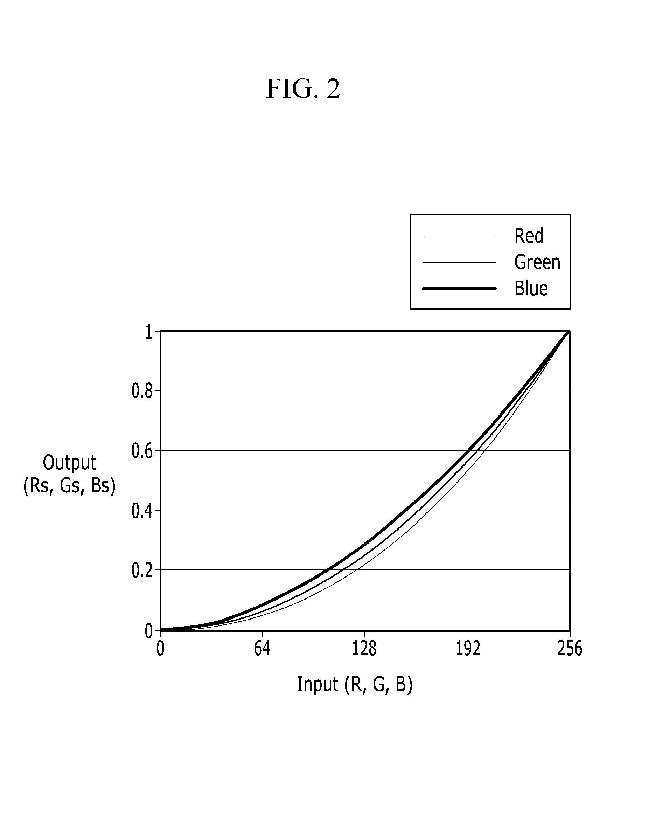

When the RGB signal is the digital value having a 256 grayscale, the calculation of the RsGsBs value from the input RGB signal may use an inverse gamma graph of FIG. 2.

FIG. 2 is an inverse gamma graph representing an RsGsBs value for RGB according to an exemplary embodiment. An inverse gamma 1D look up table like Table 1 may be obtained from the inverse gamma graph of FIG. 2.

(Table 1)

| Input RGB | Rs | Gs | Bs |
| --- | --- | --- | --- |
| 0 | 0.00000 | 0.00000 | 0.00000 |
| 1 | 0.00001 | 0.00002 | 0.00005 |
| 2 | 0.00002 | 0.00006 | 0.00016 |
| 3 | 0.00006 | 0.00014 | 0.00034 |
| 4 | 0.00011 | 0.00025 | 0.00056 |
| ... | ... | ... | ... |
| 251 | 0.96581 | 0.96887 | 0.97794 |
| 252 | 0.97430 | 0.97661 | 0.97892 |
| 253 | 0.98283 | 0.98438 | 0.98593 |
| 254 | 0.99139 | 0.99217 | 0.99295 |
| 255 | 1.00000 | 1.00000 | 1.00000 |

The inverse gamma processor 111 may calculate the RsGsBs value from the RGB signal that is input by using the inverse gamma 1D look up table. The calculated RsGsBs value is transmitted to the tristimulus value calculator 112.
The tristimulus value calculator 112 calculates the tristimulus value XYZ from the RsGsBs value by using the first convert matrix. The first convert matrix is generated by the target convert matrix generator 113.
The target convert matrix generator 113 generates the first convert matrix by using the xy chromaticity coordinates of the RGB primary of the target display, the white xy chromaticity coordinates, and the luminance.
The generation process of the first convert matrix will now be described.
The chromaticity coordinates xyz are calculated from the tristimulus value XYZ value like Equation 2.

(Equation 2)

$$x = \frac{X}{X+Y+Z}, \quad y = \frac{Y}{X+Y+Z}, \quad z = \frac{Z}{X+Y+Z}$$

If Equation 2 is calculated, Equation 3 may be obtained.

(Equation 3)

$$X + Y + Z = \frac{X}{x} = \frac{Y}{y} = \frac{Z}{z}$$

In Equation 3, if X and Z for Y are expressed, Equation 4 may be obtained.

(Equation 4)

$$X = \frac{x}{y}Y, \quad Z = \frac{z}{y}Y$$

The xy chromaticity coordinates (x, y) of the RGB primary, the white xy chromaticity coordinates (x, y), and the white luminance Y are known, and x+y+z=1 is established by Equation 2 such that z may be obtained. Accordingly, if the luminance Y of the RGB is given in Equation 4, X and Z may be calculated.

The additivity of the target display is established such that, if Equation 4 substitutes to Equation 1 and is summarized by matrix multiplication, Equation 5 is obtained.

(Equation 5)

$$\begin{bmatrix} Xw \\ Yw \\ Zw \end{bmatrix} = \begin{bmatrix} \dfrac{xr}{yr} & \dfrac{xg}{yg} & \dfrac{xb}{yb} \\ 1 & 1 & 1 \\ \dfrac{zr}{yr} & \dfrac{zg}{yg} & \dfrac{zb}{yb} \end{bmatrix} \begin{bmatrix} Yr \\ Yg \\ Yb \end{bmatrix}$$

In Equation 5, a 3×1 matrix of a left side and a 3×3 matrix of a right side are values that are known, and a 3×1 matrix of the right side, that is, the luminance (YrYgYb) of RGB is a value that must be calculated.

The luminance (YrYgYb) of RGB is calculated according to Equation 6.

(Equation 6)

$$\begin{bmatrix} Yr \\ Yg \\ Yb \end{bmatrix} = \begin{bmatrix} \dfrac{xr}{yr} & \dfrac{xg}{yg} & \dfrac{xb}{yb} \\ 1 & 1 & 1 \\ \dfrac{zr}{yr} & \dfrac{zg}{yg} & \dfrac{zb}{yb} \end{bmatrix}^{-1} \begin{bmatrix} Xw \\ Yw \\ Zw \end{bmatrix}$$

If the luminance (YrYgYb) of RGB is calculated according to Equation 6, the other tristimulus values Xr, Zr, Xg, Zg, Xb, and Zb are also calculated by Equation 4.

The additivity is established for the target display such that the tristimulus value XYZ by the RGB combination is increased as the RGB of the digital value. The value that the RGB signal is linearly changed is the RsGsBs value such that Equation 7 is established.

(Equation 7)

$$\begin{bmatrix} X \\ Y \\ Z \end{bmatrix} = \begin{bmatrix} Xr & Xg & Xb \\ Yr & Yg & Yb \\ Zr & Zg & Zb \end{bmatrix} \begin{bmatrix} Rs \\ Gs \\ Bs \end{bmatrix}$$

In Equation 7, a 3×3 matrix of the right side represents the tristimulus value of the RGB primary of the target display. The tristimulus value of the RGB primary has been calculated through Equations 2 to 6. In Equation 7, if Rs=1, Gs=1, and Bs=1 are provided, Equation 7 becomes Equation 1.

Equation 7 becomes the first convert matrix that is calculated according to the color gamut characteristic of the target display. The target convert matrix generator 113 generates the first convert matrix by the above method.

The tristimulus value calculator 112 may calculate the tristimulus value XYZ by substituting the RsGsBs value transmitted from the inverse gamma processor 111 to the 3×1 matrix of the right side of the first convert matrix (Equation 7).

The color gamut converter 121 converts the tristimulus value XYZ into the Rs'Gs'Bs' value by using the second convert matrix. The Rs'Gs'Bs' value is totally referred to as a group of Rs', Gs', and Bs'. The second convert matrix may be generated by the reference convert matrix generator 123.

The reference convert matrix generator 123 knows the xy chromaticity coordinates of the RGB primary of the reference display, the white xy chromaticity coordinates, and the luminance. Accordingly, the reference convert matrix generator 123 may generate the second convert matrix according to the color gamut characteristic of the reference display by the same method as the method described in Equations 1 to 7 by using the xy chromaticity coordinates of the RGB primary of the reference display, the white xy chromaticity coordinates, and the luminance.

The second convert matrix is generated like Equation 8.

$$(\text{Equation } 8)$$

$$\begin{bmatrix} Rs' \\ Gs' \\ Bs' \end{bmatrix} = \begin{bmatrix} Xr & Xg & Xb \\ Yr & Yg & Yb \\ Zr & Zg & Zb \end{bmatrix}^{-1} \begin{bmatrix} X \\ Y \\ Z \end{bmatrix}$$

In Equation 8, a $3 \times 3$ matrix of the right side represents the tristimulus value of the RGB primary of the reference display. Equation 8 becomes the second convert matrix calculated according to the color gamut characteristic of the reference display.

The color gamut converter 121 calculates the Rs'Gs'Bs' value by substituting the tristimulus value XYZ transmitted from the tristimulus value calculator 112 to the $3 \times 1$ matrix of the right side ofthe second convert matrix (Equation 8). The Rs'Gs'Bs' value, as the value that the R'G'B' signal of the digital value is linearly changed, is expressed as a value between 0 to 1. The color gamut converter 121 transmits the calculated Rs'Gs'Bs' value to the gamma processor 122.

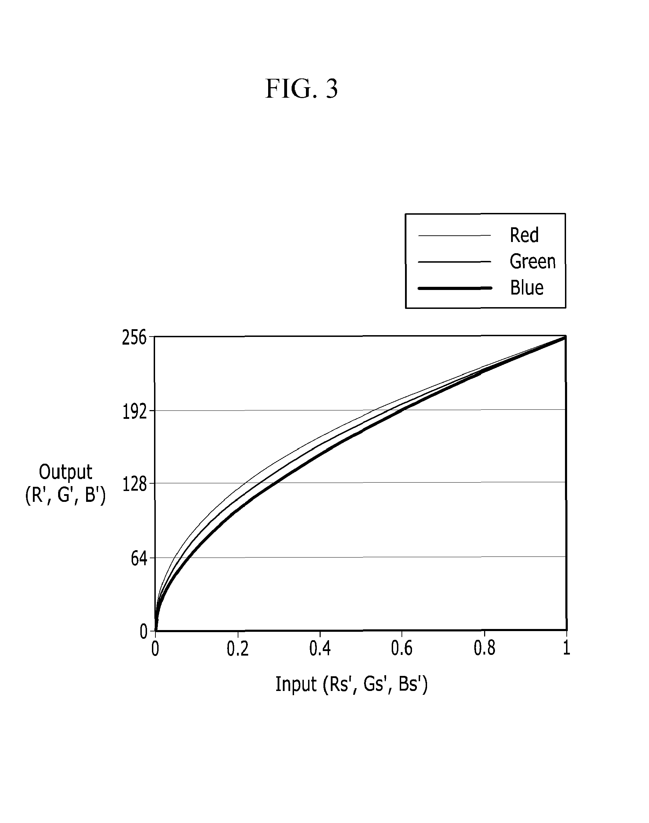

The gamma processor 122 calculates the R'G'B' signal by gamma-correcting the Rs'Gs'Bs' value. When the R'G'B' signal is a digital value having a 256 grayscale, the calculation of the R'G'B' signal from the RsGsBs value may use the gamma graph of FIG. 3.

FIG. 3 is a gamma graph representing an RGB value for an RsGsBs value according to an exemplary embodiment. A gamma 1D look up table like Table 2 may be obtained from the gamma graph of FIG. 3.

(Table 2)

| Rs' | Gs' | Bs' | Output R'G'B' |
|---|---|---|---|
| 0.00000 | 0.00000 | 0.00000 | 0 |
| 0.00001 | 0.00002 | 0.00005 | 1 |
| 0.00002 | 0.00006 | 0.00016 | 2 |
| 0.00006 | 0.00014 | 0.00034 | 3 |
| 0.00011 | 0.00025 | 0.00056 | 1 |
| ... | ... | ... | ... |
| 0.96581 | 0.96881 | 0.97194 | 251 |
| 0.97430 | 0.97661 | 0.97892 | 252 |
| 0.98283 | 0.98438 | 0.98593 | 253 |
| 0.99139 | 0.99217 | 0.99295 | 254 |
| 1.00000 | 1.00000 | 1.00000 | 255 |

The gamma processor 122 may calculate the R'G'B' signal from the Rs'Gs'Bs' value input by using the gamma 1D look up table.

The calculated R'G'B' signal is input to the reference display, and the reference display may reproduce the same color as the color displayed in the target display according to the R'G'B' signal.

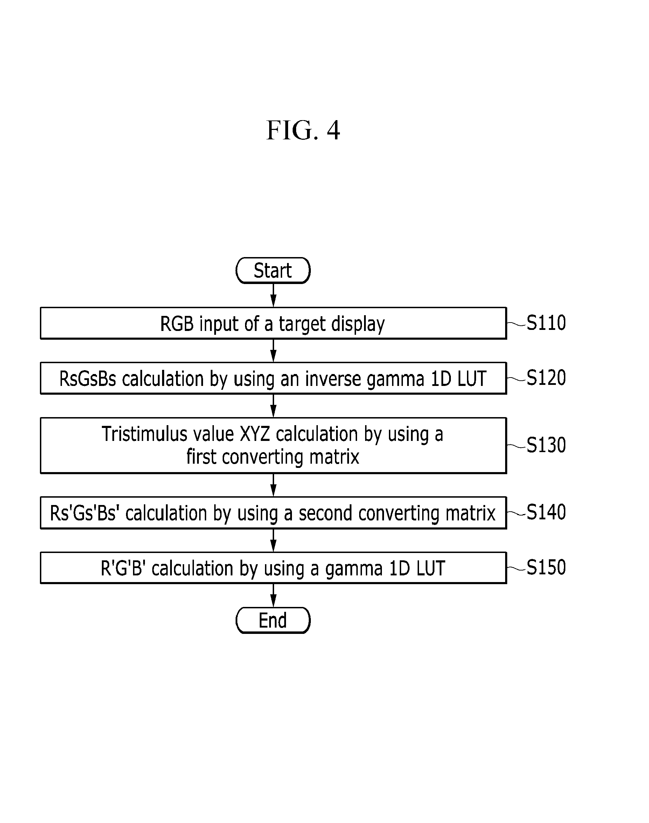

FIG. 4 is a flowchart of a color gamut converting method according to an exemplary embodiment.

Referring to FIGS. 1 and 4, the RGB signal of the target display is input to the inverse gamma processor 111 (S110).

The inverse gamma processor 111 calculates the RsGsBs value from the RGB signal of the target display by using the inverse gamma 1D look up table (S120). The inverse gamma 1D look up table is a look up table for inverse gamma correction of the RGB signal into the RsGsBs value. When the RGB signal is the digital value having a 256 grayscale, the inverse gamma processor 111 may generate the inverse gamma 1D look up table of Table 1 extracted from the inverse gamma graph of FIG. 2. The inverse gamma processor 111 transmits the calculated RsGsBs value to the tristimulus value calculator 112.

The tristimulus value calculator 112 calculates the tristimulus value XYZ from the RsGsBs value by using the first convert matrix (S 130). The first convert matrix is generated by using the xy chromaticity coordinates of the RGB primary of the target display, the white xy chromaticity coordinates, and the luminance. That is, the first convert matrix is generated according to the color gamut characteristic of the target display. The first convert matrix may be generated according to Equations 2 to 7 described in FIG. 1. The tristimulus value calculator 112 transmits the calculated tristimulus value XYZ to the color gamut converter 121.

The color gamut converter 121 calculates the tristimulus value XYZ into the Rs'Gs'Bs' value by using the second convert matrix (S 140). The second convert matrix is generated by using the xy chromaticity coordinates of the RGB primary of the reference display, the white xy chromaticity coordinates, and the luminance. That is, the second convert matrix is generated according to the color gamut characteristic of the reference display. The second convert matrix may be generated according to Equations 2 to 8 described in connection with FIG. 1. The color gamut converter 121 transmits the calculated Rs'Gs'Bs' value to the gamma processor 122.

The gamma processor 122 calculates the R'G'B' signal of the reference display from the Rs'Gs'Bs' value by using the gamma 1D look up table (S150). The gamma 1D look up table is a look up table for gamma-correcting the Rs'Gs'Bs' value into the R'G'B' signal. When the R'G'B' signal is the digital value having 256 grayscales, the gamma processor 122 may generate the gamma 1D look up table of Table 2 derived from the gamma graph of FIG. 3. The gamma processor 122 inputs the calculated R'G'B' to the reference display.

The reference display may reproduce the same color as the color displayed in the target display according to the R'G'B' signal.

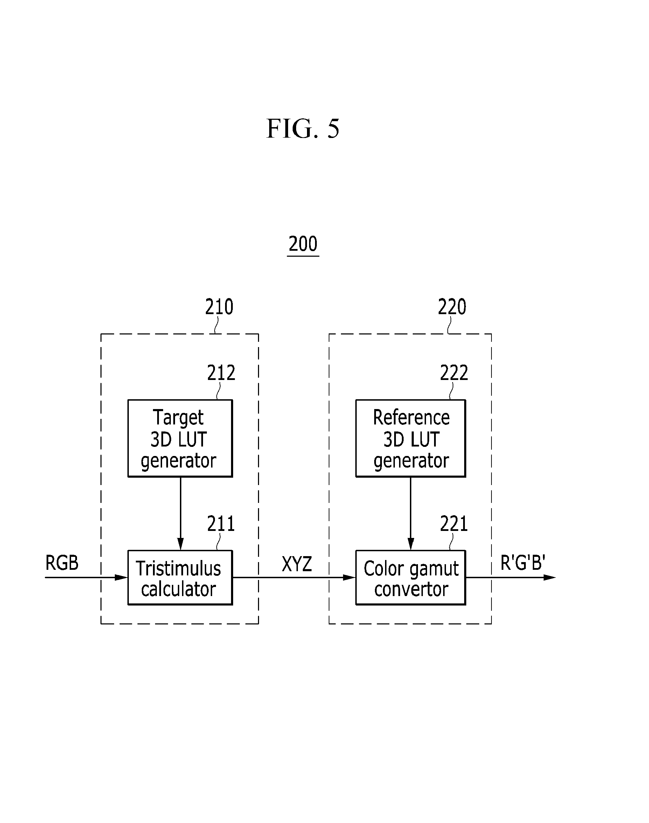

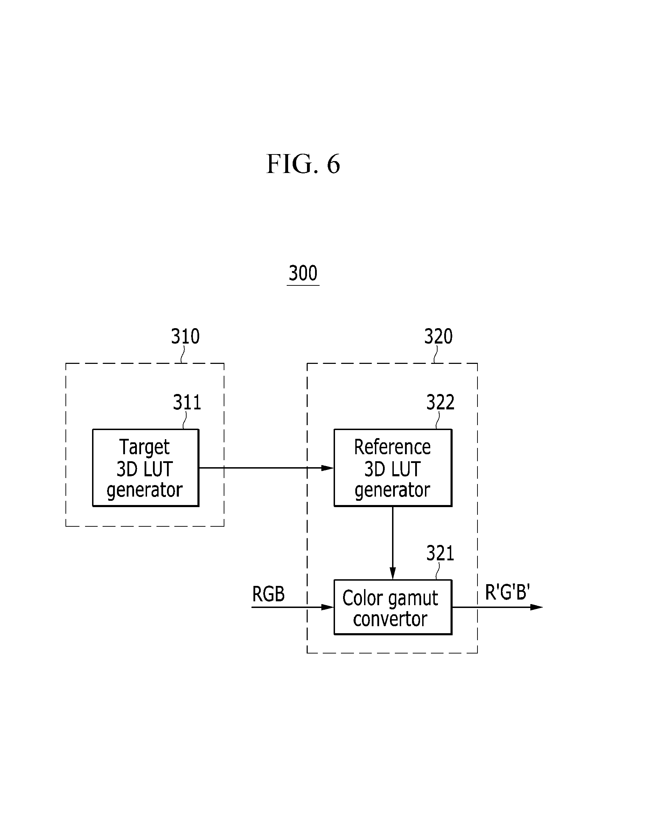

In another embodiment, additivity of the target display and the reference display may not be established. If the additivity is not established, the first convert matrix and the second convert matrix may not be used, and in this case, a 3D look up table may be used. Next, the color gamut converting device using the 3D look up table will be described with reference to FIG. 5 and 6.

FIG. 5 is a block diagram of a color gamut converting device according to another exemplary embodiment.

Referring to FIG. 5, the color gamut converting device 200 includes a target display processor 210 and a reference display processor 220.

The target display processor 210 converts the RGB signal of the target display into the tristimulus value XYZ according to the target display color gamut. The target display processor 210 includes a tristimulus value calculator 211 and a target 3D look up table generator 212.

The tristimulus value calculator 211 calculates the tristimulus value XYZ for an unknown RGB signal of the target display through 3D interpolation using the target 3D look up table. The target 3D look up table (to match the tristimulus value XYZ value that is known for the input RGB of the target display to each other) may be generated by the target 3D look up table generator 212. As the 3D interpolation, interpolation such as prism, tetrahedral, and trilinear interpolation may be used. The tristimulus value calculator 211 transmits the calculated tristimulus value XYZ to the color gamut converter 221.

The target 3D look up table generator 212 generates the target 3D look up table. Firstly, if a size n×n×n of the target 3D look up table is determined, a patch of a number n×n×n in the target display is measured to obtain a pair between a RGB lattice and the tristimulus value XYZ. The obtained pair between the RGB lattice and the tristimulus value XYZ becomes the target 3D look up table. For example, the RGB signal of the target display is respectively determined as nine levels, and combinations of the RGB signal of 9×9×9=729 are formed. The target 3D look up table may be obtained by measuring the tristimulus value XYZ for the combination of the 729 RGB signals.

The reference display processor 220 receives the tristimulus value XYZ according to the color gamut of the target display and converts the tristimulus value XYZ into the R'G'B' signal according to the color gamut of the reference display. The reference display processor 220 includes a color gamut converter 221 and a reference 3D look up table generator 222.

The reference 3D look up table generator 222 generates a reference 3D look up table. The reference 3D look up table generator 222 determines the size n×n×n of the reference 3D look up table and measures the patch of n×n×n in the reference display to obtain the pair between the R'G'B' lattice and the tristimulus value XYZ thereby generating the reference 3D look up table.

The color gamut converter 221 converts the tristimulus value XYZ transmitted from the tristimulus value calculator 211 by the 3D interpolation using the reference 3D look up table into the R'G'B' signal. At this time, the color gamut converter 221 repeatedly calculates the tristimulus value XYZ and the R'G'B' signal as the 3D interpolation using the reference 3D look up table and obtains the tristimulus value XYZ that is calculated most similarly or closest to the tristimulus value XYZ transmitted from the tristimulus value calculator 211, thereby obtaining the R'G'B' signal corresponding thereto.

The obtained R'G'B' signal is input to the reference display, and the reference display may reproduce the same color as the color displayed in the target display according to the R'G'B' signal.

FIG. 6 is a block diagram of a color gamut converting device according to yet another exemplary embodiment.

Referring to FIG. 6, the color gamut converting device 300 includes a target display processor 310 and a reference display processor 320.

The target display processor 310 includes a target 3D look up table generator 311.

The target 3D look up table generator 311 determines the size n×n×n of the target 3D look up table and measures the n×n×n number patches in the target display to obtain the pair between the RGB lattice and the tristimulus value XYZ thereby generating the target 3D look up table. The target 3D look up table is transmitted to the reference 3D look up table generator 322.

The reference display processor 320 includes a color gamut converter 321 and a reference 3D look up table generator 322.

The reference 3D look up table generator 322 generates the reference 3D look up table. The reference 3D look up table generator 322 determines the size n×n×n of the first reference 3D look up table and measures the n×n×n number patches in the reference display to obtain the pair between the R'G'B' lattice and the tristimulus value XYZ thereby generating the first reference 3D look up table. The reference 3D look up table generator 322 repeatedly calculates the tristimulus value XYZ and the R'G'B' signal by the 3D interpolation using the first reference 3D look up table and obtains the R'G'B' signal corresponding to the tristimulus value XYZ that is calculated most similarly to the tristimulus value XYZ of the target 3D look up table. By this method, the reference 3D look up table generator 322 matches the RGB signal of the target 3D look up table and the R'G'B' signal of the first reference 3D look up table to generate the second reference 3D look up table. The second reference 3D look up table may include the n×n×n number R'G'B' signals of the reference display corresponding to the n×n×n number RGB signals of the target display. The second reference 3D look up table is transmitted to the color gamut converter 321.

The color gamut converter 321 converts the RGB signal of the target display into the R'G'B' signal of the reference display by the 3D interpolation using the second reference 3D look up table.

The R'G'B' signal is input to the reference display and the reference display may reproduce the same color as the color displayed in the target display according to the R'G'B' signal.

By way of summation and review, various displays having different color gamuts must be actually driven to compare the image quality of the displays. Thus, such image quality comparisons generally require that each display be purchased and driven, such that a large amount of time and money may be expended. Also, it is impossible to compare the image quality of a display having a predetermined color gamut that is not actually produced.

As described above, embodiments provide a color gamut converting device simulating a display having a different color gamut, or a predetermined color gamut, in one display. Embodiments also provide a method of simulating a display having a different color gamut, or a predetermined color gamut, in one display. A display having a different color gamut or a display having an arbitrary color gamut may be thus simulated by one display, such that image qualities of a plurality of displays may be compared while reducing time and cost.

Exemplary embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

<Description of Symbols>
100: color gamut converting device
110: target display processor
111: inverse gamma processor
112: tristimulus value calculator
113: target convert matrix generator
120: reference display processor
121: color gamut converter
122: gamma processor
123: reference convert matrix generator

**Claims**

1. A color gamut converting device (100, 200), comprising:

   a target display processor (110, 210) adapted to receive an RGB signal of a target display and to convert the RGB signal into a tristimulus value XYZ according to a color gamut of the target display; and
   a reference display processor (120, 220) adapted to calculate an R'G'B' signal of a reference display representing the same tristimulus value XYZ as the tristimulus value XYZ calculated by the target display processor (110, 210), and adapted to provide the R'G'B' signal to the reference display for reproducing a color to be displayed according to the R'G'B' signal corresponding to the RGB signal in the target display.

2. The color gamut converting device as claimed in claim 1, wherein the target display processor (110) includes:

   an inverse gamma processor (111) adapted to calculate an RsGsBs value by inverse gamma correction of the RGB signal of the target display, wherein the RsGsBs value has a value ranging from 0 to 1;
   a tristimulus value calculator (112) adapted to calculate the tristimulus value XYZ from the RsGsBs value by using a first convert matrix; and
   a target convert matrix generator (113) adapted to generate the first convert matrix by using xy chromaticity coordinates of an RGB primary of the target display, white xy chromaticity coordinates, and a white luminance.

3. The color gamut converting device as claimed in claim 2,
   wherein the inverse gamma processor (111) is adapted to calculate the RsGsBs value from the RGB signal by using an inverse gamma 1D look up table.

4. The color gamut converting device as claimed in one of the preceding claims, wherein the reference display processor (120) includes:

   a color gamut converter (121) adapted to convert the tristimulus value XYZ into an Rs'Gs'Bs' value by using a second convert matrix, wherein the Rs'Gs'Bs' value has a value from 0 to 1;
   a gamma processor (122) adapted to gamma-correct the Rs'Gs'Bs' value to calculate the R'G'B' signal; and
   a reference convert matrix generator (123) adapted to generate the second convert matrix by using xy chromaticity coordinates of the RGB primary of the reference display, white xy chromaticity coordinates, and a white luminance.

5. The color gamut converting device as claimed in claim 4, wherein the gamma processor (122) is adapted to calculate the R'G'B' signal from the Rs'Gs'Bs' value by using a gamma 1D look up table.

6. The color gamut converting device as claimed in one of claims 2 through 5, wherein a sum of a measuring XYZ of the RGB primary of the target display and/or of the reference display is the same as the white measuring XYZ.

7. The color gamut converting device as claimed in claim 1, wherein the target display processor (210) includes:

   a tristimulus value calculator (211) adapted to calculate the tristimulus value XYZ for the RGB signal of the target display by 3D interpolation using a target 3D look up table; and
   a target 3D look up table generator (212) adapted to generate the target 3D look up table by measuring an n×n×n number patches in the target display to obtain a pair between an RGB lattice and a tristimulus value XYZ.

8. The color gamut converting device as claimed in claim 7, wherein the reference display processor (220) includes:

   a color gamut converter (221) adapted to obtain the R'G'B' signal by calculating the tristimulus value XYZ by a 3D interpolation using a reference 3D look up table, the tristimulus value XYZ being the best approximation of the tristimulus value XYZ calculated by the target display processor (210); and
   a reference 3D look up table generator (222) adapted to generate the reference 3D look up table by measuring an n×n×n of number patches in the reference display to obtain a pair between an R'G'B' lattice and the tristimulus value XYZ.

9. A method of converting a color gamut, comprising:

a target display processing operation converting an RGB signal of a target display into a tristimulus value XYZ according to a color gamut of a target display; and

a reference display processing operation calculating an R'G'B' signal of a reference display representing the tristimulus value XYZ that is the same as the tristimulus value XYZ calculated for the target display,

wherein the reference display is a display reproducing a color to be displayed according to the R'G'B' signal corresponding to the RGB signal in the target display.

10. The method as claimed in claim 9, wherein:

the target display processing operation includes:

calculating an RsGsBs value by inversely gamma-correcting the RGB signal of the target display;
generating a first convert matrix by using xy chromaticity coordinates of an RGB primary of the target display, white xy chromaticity coordinates, and a white luminance; and
calculating the tristimulus value XYZ from the RsGsBs value by using the first convert matrix,

wherein the RsGsBs value has a value ranging from 0 to 1.

11. The method as claimed in claim 10, wherein the calculation of the RsGsBs value includes calculating the RsGsBs value from the RGB signal by using an inverse gamma 1D look up table.

12. The method as claimed in one of claims 10 and 11, wherein:

the reference display processing operation includes:

generating a second convert matrix by using xy chromaticity coordinates of an RGB primary of the reference display, white xy chromaticity coordinates, and a white luminance;
calculating the tristimulus value XYZ into an Rs'Gs'Bs' value by using the second convert matrix; and
calculating the R'G'B' signal by gamma-correcting the Rs'Gs'Bs' value,
wherein the Rs'Gs'Bs' value has a value ranging from 0 to 1.

13. The method as claimed in claim 12, wherein the calculation of the tristimulus value XYZ into the Rs'Gs'Bs' value includes calculating the R'G'B' signal from the Rs'Gs'Bs' value by using a gamma 1D look up table.

14. The method as claimed in one of claims 10 to 13, wherein a sum of a measuring XYZ of the RGB primary of the target display and/or of the reference display is the same as the white measuring XYZ.

15. The method as claimed in claim 9, wherein the target display processing operation includes calculating the tristimulus value XYZ for the RGB signal of the target display by 3D interpolation using a target 3D look up table, wherein the target 3D look up table is generated by measuring an $n \times n \times n$ number of patches in the target display to obtain a pair between an RGB lattice and the tristimulus value XYZ.

16. The method as claimed in claim 15, wherein the reference display processing operation includes obtaining the R'G'B' signal by calculating the tristimulus value XYZ by 3D interpolation using a reference 3D look up table, the tristimulus value XYZ being the best approximation of the tristimulus value XYZ calculated by the target display processor (210), wherein the reference 3D look up table is generated by measuring an $n \times n \times n$ number of patches in the reference display to obtain a pair between an R'G'B' lattice and the tristimulus value XYZ.

# FIG. 1

EP 2 725 803 A2

100

110

120

113 — target convert matrix generator

reference convert matrix generator — 123

111

inverse gamma processor

112

target convert matrix generator

121

reference convert matrix generator

122

RGB → | inverse gamma processor | → RsGsBs → | tristimulus value calculator | → XYZ → | color gamut converter | → Rs'Gs'Bs' → | gamma processor | → R'G'B'

FIG. 2

# FIG. 3

# FIG. 4

```
                    ( Start )
                        │
                        ▼
   ┌─────────────────────────────────────────────┐
   │         RGB input of a target display        │──S110
   └─────────────────────────────────────────────┘
                        │
                        ▼
   ┌─────────────────────────────────────────────┐
   │ RsGsBs calculation by using an inverse gamma 1D LUT │──S120
   └─────────────────────────────────────────────┘
                        │
                        ▼
   ┌─────────────────────────────────────────────┐
   │    Tristimulus value XYZ calculation by using a    │──S130
   │            first converting matrix           │
   └─────────────────────────────────────────────┘
                        │
                        ▼
   ┌─────────────────────────────────────────────┐
   │ Rs'Gs'Bs' calculation by using a second converting matrix │──S140
   └─────────────────────────────────────────────┘
                        │
                        ▼
   ┌─────────────────────────────────────────────┐
   │   R'G'B' calculation by using a gamma 1D LUT  │──S150
   └─────────────────────────────────────────────┘
                        │
                        ▼
                     ( End )
```

# FIG. 5

<u>200</u>

# FIG. 6

300

310

320

311

322

```
Target
3D LUT
generator
```

```
Reference
3D LUT
generator
```

321

RGB → 
```
Color gamut
convertor
```
 → R'G'B'